# DEMANDE DE BREVET EUROPEEN

(11) **EP 0 571 260 A2**
(43) Date de publication de la demande: **24.11.1993**
(21) Numéro de dépôt: 93401257.6
(22) Date de dépôt: 17.05.1993
(51) Int. Cl.: B32B 27/08

(54) **Complexe polymères multicouches destiné, notamment, à constituer une enveloppe thermoretractable et procédé pour l'obtention**

(30) Priorité: 19.05.1992 FR 9206049
(71) Demandeur: Société à Responsabilité Limitée DACRY, Rambouillet (Yvelines) (FR)
(72) Inventeur: Bonnal, Christian, Marie-Yves, Robert, F-17250 Saint Porchaire (FR)
(74) Mandataire: Rataboul, Michel Charles

(57) **Abrégé**

Le complexe polymère multicouches est caractérisé en ce qu'il comprend :
- deux couches extérieures (1 et 2), l'une destinée à être en contact avec le substrat et l'autre destinée à être en contact avec le produit emballé, couches (1 et 2) qui sont constituées par au moins un polymère thermoplastique contenant des liaisons ioniques et covalentes, à savoir une résine ionomère,
- au moins une couche intérieure "barrière" (3) constituée par au moins un polymère thermoplastique à structure semi-cristalline, à savoir une résine comprenant des copolymères d'alcool vinylique et d'éthylène,
- et de préférence une couche intermédiaire adhésive (4-5) intercalée entre la couche barrière (3) et chaque couche extérieure (1-2).

## Description

La présente invention concerne un complexe multicouches destiné plus particulièrement à l'obtention d'emballages de produits alimentaires.

Actuellement, on connaît un procédé de conditionnement de produits sous vide qui consiste à placer le produit à emballer dans une enveloppe, à faire le vide dans l'enveloppe et à la fermer, à immerger l'ensemble dans un fluide porté à une température relativement élevée (par exemple un bain aqueux porté à une température d'environ 90 à 120° C) pendant un temps relativement bref (de l'ordre de quelques secondes) afin de provoquer la rétraction bidirectionnelle de l'enveloppe contre le produit à emballer.

Ce procédé nécessite que le ou les matériaux constituant l'enveloppe présentent plusieurs caractéristiques, parfois contradictoires. Par exemple résister à une température élevée et, simultanément, avoir une bonne soudabilité, ce qui suppose, on le comprend, une grande sensibilité à la chaleur.

Par ailleurs, pour l'emballage de produits alimentaires, ces matériaux qui constituent l'enveloppe doivent respecter les normes concernant leur compatibilité, c'est-à-dire qu'ils doivent avoir des caractéristiques leur permettant le qualificatif de "qualité alimentaire".

En outre, il faut que ces matériaux soient :
- chimiquement neutres vis-à-vis de réactifs chimiques, biologiques, biochimiques;
- non toxiques pour le consommateur, c'est-à-dire sans effet sur l'organisme humain.

Enfin, il faut que ces matériaux présentent des propriétés physiques, mécaniques, physico-chimiques et chimiques appropriées.

Notamment, il est nécessaire que ces matériaux possèdent :
- une bonne "ténacité", à savoir une bonne résistance aux chocs en traction et une température dite "de fragilisation" satisfaisante,
- une bonne "turbidité", c'est-à-dire des propriétés optiques correctes notamment de transparence et d'absorption des rayonnements infrarouges,
- des qualités mécaniques : résistance à la traction, à la flexion, à l'allongement, à la rupture, une dureté satisfaisante et une bonne résistance à l'abrasion et aux microperforations,
- des propriétés thermiques de faible inflammabilité, de conductibilité thermique, de chaleur spécifique, un bon coefficient de dilatation thermique, un point de fusion et un point de solidification approprié, et une température dite "de déformation sous charge" qui soit située dans une gamme convenant à leur usage normal,
- des propriétés de résistance aux agents chimiques (acides, bases, alcool,) et de gonflement en présence d'hydrocarbures, et d'imperméabilité aux huiles.

Afin de concilier tous ces critères, on doit utiliser un complexe pour réaliser l'enveloppe car aucun matériau simple actuellement connu ne présente à lui seul toutes les caractéristiques voulues.

C'est pourquoi on réalise l'enveloppe selon au moins deux couches de matériaux distincts, intimement associés pour constituer un film ou "complexe", afin de présenter ensemble des caractéristiques complémentaires qui s'ajoutent.

Malheureusement, les films qui existent actuellement ne donnent pas entière satisfaction et constituent en réalité un compromis entre des défauts et des qualités des matériaux associés pour constituer l'enveloppe, plutôt que l'addition réelle de qualités individuelles.

De plus, ces films résultent d'une simple juxtaposition de matériaux hétérogènes qui présentent des propriétés distinctes et ne constituent pas un tout structurel approprié aux exigences requises pour des applications données.

En outre, on sait depuis longtemps que la propriété de thermorétractibilité de l'enveloppe est indispensable pour s'appliquer intimement contre la surface des produits emballés, car sinon, il apparaît de nombreux plis qui constituent des inconvénients majeurs et notamment :
- la perforation l'une par l'autre des enveloppes contiguës groupées dans un même carton;
- l'accumulation de jus, de sauce, de liquides divers tels que des exsudats, qui, sous l'effet de la lumière ambiante, entraînent la prolifération de microbes, de germes et/ou d'agents pathogènes, ce qui est évidemment contraire aux normes recherchées pour l'hygiène et la sécurité;
- une présentation non esthétique dans les rayonnages et les étalages des magasins.

Or, comme on l'a vu précédemment, les matériaux utilisés doivent être thermorétractables, c'est-à-dire qu'ils doivent présenter la caractéristique de pouvoir d'abord être étirés dans les deux dimensions du plan lors de l'élaboration du film, puis de pouvoir ensuite être rétrécis sous l'action de la chaleur, après mise en volume autour du produit à emballer, par un phénomène que l'on qualifie de "mémoire".

Un film se présente sous la forme de minces couches superposées dont la largeur et la longueur initiales ont été allongées depuis leur configuration initiale stable à la chaleur jusqu'à une configuration pour laquelle ces dimensions sont instables en cas de chauffage.

Les différentes couches de ces films ont tendance à se déplacer les unes par rapport aux autres du fait que, précisément, elles n'ont pas toutes les mêmes propriétés, en particulier leur rétractabilité à chaud.

Les matériaux constituant les couches de ces films sont généralement des polymères, ce terme désignant les homopolymères, copolymères, terpolymères et toutes autres associations de monomères, polymères qui sont capables de mémoire plastique induite qui leur confère la propriété de pouvoir se réduire en dimensions, pour prendre un état stable (y compris à la chaleur), uniquement sous l'effet d'une opération de chauffage.

Ces films peuvent comporter une couche constituée par un métal dit à thermorétrécissement.

Pour obtenir actuellement un polymère thermorétractable, on chauffe une matière thermoplastique à une température insuffisante pour provoquer une fusion de la structure moléculaire mais suffisante pour permettre une déformation de cette structure moléculaire.

Dès que la température de déformation est atteinte, on étire la matière, puis on la laisse refroidir sous déformation.

Une augmentation de la température à une valeur suffisante pour neutraliser les effets physico-chimiques résultant de l'étirement provoque une tendance de la matière à se rétrécir pour retrouver ses dimensions initiales.

Un autre procédé par lequel des polymères peuvent être rendus thermorétractables, consiste à provoquer une réticulation par des moyens chimiques, par exemple à partir de péroxydes, ou par des radiations ionisantes.

Les radiations employées peuvent être de différentes natures et notamment, on peut utiliser des particules chargées (par exemple des particules α ou β ), des particules neutres (neutrons), des radiations électromagnétiques (radiations τ ou ultra-violets).

Le chauffage de la matière réticulée provoque la fusion des cristaux d'une matière thermoplastique cristalline ou réduit considérablement les forces intermoléculaires internes telles que les liaisons hydrogène, les forces d'interréaction entre dipôles ou force de VAN DER WALL, etc., afin de permettre une déformation de la matière.

Contrairement à l'étirement conférant une mémoire dite "plastique" à la matière, la réticulation ne nécessite pas un réglage précis de la température car la matière réticulée ne subit pas des phénomènes dits d'écoulement aux températures élevées.

L'article étiré est refroidi rapidement pour qu'il conserve sa forme tant qu'il est à température ambiante. En effet, au cours de cette phase de refroidissement rapide, on obtient un rétablissement des forces intermoléculaires de liaison entre les chaînes de molécules, telles que la cristallinité, de sorte qu'elle dominent les forces résultant de la réticulation.

Après chauffage, les forces de réticulation deviennent à nouveau dominantes et il en résulte que la matière a tendance à se rétrécir et à reprendre sa forme réticulée.

Bien entendu, on connaît d'autres moyens pour conférer à un polymère des caractéristiques de thermorétraction.

Par exemple, une technique couramment utilisée consiste à chauffer le polymère au-delà d'une température dite "de transition", à l'étirer et à le refroidir à une température inférieure à celle de sa transition vitreuse.

Les matières thermorétractables comprennent toutes celles qui, quand elles ont été chauffées au-dessus de leur température de transition (c'est-à-dire la température, ou la plage de températures, de ramollisement d'une matière dure amorphe) mais à une température inférieure à la température de fusion cristalline (c'est-à-dire la température, ou la plage de températures, dans laquelle une matière polymère cristalline ou cristalline réticulée passe de l'état cristallin à l'état amorphe).

Par exemple, comme matières thermorétractables à mémoire plastique ou à mémoire élastique actuellement utilisées on peut citer : les polyoléfines (polyéthylène, polypropylène, polybutène, différents copolymères de l'éthylène, du propylène, du butène, etc.), les halogénures de polyvinylidènes (par exemple le fluorure et le chlorure de polyvinylidène), les polyacrylates, les polyamides (Nylon 6-6 ou Nylon 6-10), les polyesters (tétraphtalate de polyéthylène), les polymères fluorés (par 7 exemple le polytétrafluoréthylène et les copolymères vinylidènes-fluore d'héxafluoropropène), les ionomères, les polyuréthanes, les résines époxy, etc.

Beaucoup de ces matériaux thermoplastiques se prêtent à un étirage biaxial sans transformation chimique préalable mais aucun de ces matériaux ne donne entière satisfaction, en particulier pour les raisons suivantes :
- certains de ces matériaux thermoplastiques ont une thermorétractabilité qui ne peut être mise en oeuvre que pendant quelques secondes aux températures relativement basses compatibles avec la fragilité thermique de nombreux produits alimentaires (c'est le cas du polypropylène, du polyéthylène dit "haute densité", des polyamides, etc.).
- d'autres de ces matériaux ont des propriétés thermiques qui conviennent mais qui n'offrent pas après l'étirage biaxial les propriétés mécaniques suffisantes (c'est le cas des polymères basse densité et de certains copolymères polyoléfiniques).

De plus, il faut noter que les règlements en vigueur interdisent de mettre en contact des produits alimentaires avec des matières qui ont été soumises aux rayonnements ionisants nécessaires à la réticulation par irradiation, de même qu'avec certains produits chimiques additifs qui permettent la réticulation par voie chimique.

En conséquence, pour pouvoir utiliser ces matériaux à des fins d'emballage de produits alimentaires, il est nécessaire que la couche réticulée ne se trouve pas au contact des produits alimentaires.

Pour des raisons techniques liées à la mise en oeuvre de l'opération d'étirage biaxial, on réalise un film multicouches sous la forme d'une gaine, à partir d'une couche à l'extérieur de laquelle (et non à l'intérieur), on extrude les couches complémentaires.

Par ailleurs, on ne peut irradier préalablement qu'une seule des couches formant le film complet car si cette irradiation a pour avantage de créer la réticulation favorable à l'étirement, elle a par contre comme inconvénient de détériorer les matériaux thermoplastiques dont la chaîne moléculaire comporte au moins un carbone quaternaire (c'est-à-dire tétra substitué) ce qui est le cas, par exemple, du polychlorure de vinylidène.

Dans ce cas, on utilise une couche dont la chaîne moléculaire ne présente pas de carbone quaternaire (par exemple des polyalcools) mais il est alors nécessaire de réaliser une irradiation de l'une des autres couches afin d'éviter une irradiation de l'ensemble du film car une telle réticulation le rend, après rétraction, cassant et favorise la formation de plis et de coins de soudures durs et blessants.

Un autre inconvénient des films connus irradiés provient du fait que ces films multicouches sont des mélanges de polymères thermoplastiques coûteux qui présentent un spectre étroit de poids moléculaire.

Le taux de réticulation de ces matières doit être relativement important (généralement supérieur à 50 %), ce qui a pour conséquence d'augmenter leur résistance à la chaleur et donc de les rendre impropres à se rétracter lorsqu'on les soumet aux équipements classiques de chauffage fonctionnant à l'air chaud.

Il faut obligatoirement provoquer le chauffage en immergeant les emballages fermés dans des bains d'eau chaude dont l'effet est nettement plus efficace, mais les équipements sont coûteux et présentent des inconvénients.

En particulier, les bains d'eau chaude provoquent une forte production de vapeur d'eau qu'il est nécessaire d'évacuer. Il en résulte des installations supplémentaires coûteuses et dont l'existence complique le processus industriel. Les emballages terminés sortent mouillés des bains d'eau chaude et il faut les sécher, d'où encore un équipement supplémentaire.

Un autre inconvénient majeur des films connus irradiés réside dans le fait que la couche interne du film doit se souder sur elle-même lorsqu'après enveloppement du produit à emballer, la gaine qui résulte de cet enveloppement est fermée par thermosoudure. Or, la couche intérieure de la gaine est celle qui a subi la réticulation et qui est donc plus résistante à la chaleur que les autres et, par conséquent, plus réfractaire à la soudure. Le fonctionnement des barres de thermosoudure qui équipent les machines devient difficile car il est impératif que la température et le temps de soudure soient ajustés de manière précise ce qui est déjà délicat à effectuer en raison des souillures provenant de l'introduction des produits à emballer, et ce qui devient très problématique lorsque le processus est compliqué par la présence d'un film peu apte en lui-même, à la soudure.

Le taux relativement élevé de réticulation a également pour effet de supprimer pratiquement la faculté de la couche interne de la gaine à "l'autothermoscellage", c'est-à-dire à la faculté de se souder à elle-même lorsqu'elle est chauffée au-dessus du point de fusion (pendant un temps bref).

La réticulation augmentant la résistance à la chaleur, diminue, par conséquent, la faculté d'autothermoscellage et appelle une température de soudure plus élevée pendant plus longtemps que ce qui est nécessaire avec une couche non réticulée.

Une autre conséquence du taux élevé d'irradiation est la diminution des propriétés d'élasticité et de plasticité de la couche traitée, ce qui est très préjudiciable à l'emballage de certains produits alimentaires qui, par nature, ont précisément besoin d'une enveloppe souple (viande avec os par exemple).

Il faut aussi noter que ces films multicouches sont fréquemment utilisés sous forme d'une gaine de diamètre prédéterminé, ce qui nécessite que l'on doit posséder une gamme de gaines de dimensions différentes et des machines capables de les utiliser pour conditionner des produits de dimensions variées.

Pour remédier à ces inconvénients, on a pensé à réaliser des films dont la couche extérieure est réalisée à partir d'un polymère non réticulé tel qu'un ionomère.

Ces ionomères sont des résines thermoplastiques obtenues par l'association d'un copolymère de l'éthylène et d'un acide carboxylique insaturé avec des ions métalliques. Ceci a pour effet de provoquer l'ionisation des groupes carboxyliques et la formation de ponts salins entre les chaînes moléculaires, qui constituent une sorte de réticulation réversible.

C'est ainsi que l'on connaît différentes compositions de films dont la couche extérieure est constituée par une résine ionomère. Pour fixer les idées, on peut citer par exemple :
- polyamide et ionomère;
- chlorure de polyvinylidène (PVDC) et ionomère;
- polyéthylène basse densité (LDPE) et ionomère;
- polyester et ionomère;
- copolymère d'acétate de vinyle et d'éthylène (EVA) et ionomère;
- ou tout simplement un film monocouche d'un ionomère.

Ces films, bien que permettant le conditionnement de produits alimentaires, ne peuvent pas être utilisés pour des produits frais à longue conservation en raison de la perméabilité aux gaz des résines ionomères, qui a pour conséquence d'exposer le produit emballé à des gaz néfastes à sa conservation, en particulier l'oxygène de l'air dont on connaît les effets désastreux, à commencer par une prolifération aérobie provoquant l'altération du produit emballé, par fermentation ou par développement d'agents pathogènes ou microbiens, altérations qui rendent ce produit alimentaire impropre à la consommation.

Pour éviter ces problèmes, on a pensé ajouter une couche dite "couche barrière" destinée à donner à l'enveloppe un haut degré d'imperméabilité aux gaz et à la vapeur d'eau en particulier. Toutefois, les couches barrières connues sont constituées à partir de polymères thermoplastiques et ne peuvent être utilisées qu'en milieu anhydre en raison de leur fragilité à l'humidité. C'est la raison pour laquelle il est impératif d'associer à cette couche barrière au moins une couche supplémentaire en contact avec le produit frais emballé constituée par un polymère imperméable.

Pour situer l'état de la technique, on peut citer les documents suivants :
- US-A-4.161.562 qui décrit un complexe comprenant une couche dite "barrière" constituée par une résine comprenant des copolymères de chlorure de vinylidène. Un tel produit présente des inconvénients marqués car, lors de sa destruction par incinération, il se produit des dégagements de vapeurs chlorées extrêmement polluantes.
- EP-A-287.942 qui décrit un complexe ayant une couche extérieure formée par un copolymère d'éthylène et d'acétate de vinyle qui a une résistance relativement faible à la chaleur et qui, surtout, est d'un emploi contestable pour le conditionnement de produits alimentaires, du fait qu'il contient de l'acide acétique.
- EP-A-323.043 qui décrit un complexe ayant des couches extérieures à base de polyéthylène basse densité dont les performances sont relativement modestes vis-à-vis des contraintes mécaniques (résistance au percement, à la déchirure, aux frottements etc.) et vis-à-vis des nécessités du soudage rapide et efficace.

La présente invention apporte une solution nouvelle à l'ensemble des inconvénients précités, en fournissant un film multicouches de polymères qui
- est symétrique et, donc, réversible à volonté,
- est rétractable à une température relativement basse,
- présente des propriétés de résistance mécanique supérieures à épaisseur égale (notamment vis-à-vis des perforations),
- présente de meilleures propriétés de soudabilité (même en présence d'impuretés),
- offre un aspect extérieur plus agréable et plus attractif (notamment un aspect plus brillant et plus transparent),
- permet la conservation des produits alimentaires frais, sans risque d'altération par fermentation ou prolifération d'agent pathogènes,
- est conforme aux normes d'alimentarité.

L'invention permet d'obtenir, par un procédé simple et peu coûteux, un film multicouches se prêtant, soit sous forme de nappe simple, au conditionnement direct, soit sous la forme de nappe double à la transformation en sacs.

A cet fin, l'invention a pour objet un complexe polymère multicouches caractérisé en ce qu'il comprend :
- deux couches extérieures, l'une destinée à être en contact avec le substrat et l'autre destinée à être en contact avec le produit emballé, couches qui sont constituées par au moins un polymère thermoplastique contenant des liaisons ioniques et covalentes, à savoir une résine ionomère,
- au moins une couche intérieure "barrière" constituée par au moins un polymère thermoplastique à structure semi-cristalline, à savoir une résine comprenant des copolymères d'alcool vinylique et d'éthylène,
- et de préférence une couche intermédiaire adhésive intercalée entre la couche barrière et chaque couche extérieure.

Selon d'autres caractéristiques de l'invention :
- la résine ionomère est une résine qui comprend des coplolyméres d'éthylène et d'acide métacrylique;
- la résine ionomère contient des ions métalliques tels que ceux du zinc ou du sodium;
- la couche intermédiaire adhésive est constituée par une résine de copolymères d'acétate de vinyle et d'éthylène.

L'invention a également pour objet un procédé pour l'obtention d'un film multicouches caractérisé en ce que l'on extrude le film sous la forme d'une gaine tubulaire en matériau à faible point de fusion, que l'on fait passer cette gaine à l'intérieur d'un bain aqueux réfrigérant tout en l'aplatissant et en l'étirant, que l'on chauffe cette gaine aplatie, que l'on ouvre et gonfle la gaine par introduction d'air comprimé jusqu'à créer une bulle dilatée provoquant l'étirement biaxial de la gaine, qu'on limite cette bulle en refermant ladite gaine par pincement transversal, qu'on enroule la gaine aplatie et refroidie en vue de son utilisation soit immédiate soit après stockage en bobines.

Selon une variante de réalisation de ce procédé, on fait passer la gaine aplatie entre des cylindres pinceurs et entre des cylindres aplatisseurs placés à l'intérieur d'une enceinte chauffée.

L'invention sera mieux comprise par la description détaillée ci-après faite en référence au dessin annexé. Bien entendu, la description et le dessin de sont donnés qu'à titre d'exemple indicatif et non limitatif.

La figure 1 est une vue schématique qui illustre un film multicouches conforme à l'invention.

La figure 2 est un ensemble de courbes qui illustre l'allongement d'un film ionomère sollicté à l'étirement, en fonction de la température.

La figure 3 représente deux courbes qui illustrent la tension à froid en fonction de la température réelle de thermoscellage pour deux films de composition différente.

La figure 4 est un ensemble de courbes qui illustre la tenue des soudures en fonction de la température pour deux films de composition différente, d'une part à l'état propre et d'autre part en présence de souillures.

La figure 5 est un ensemble de courbes qui illustre pour trois films de composition différente le temps de chauffe nécessaire à leur thermoformage, en fonction de la température et selon leur capacité d'absorption des rayons infrarouges.

La figure 6 est un ensemble de courbes qui illustre la résistance à la pénétration aux huiles, de différents films.

La figure 7 est une vue schématique montrant les différentes étapes d'un procédé de fabrication conforme à l'invention pour l'obtention d'un complexe multicouches lui aussi conforme à l'invention.

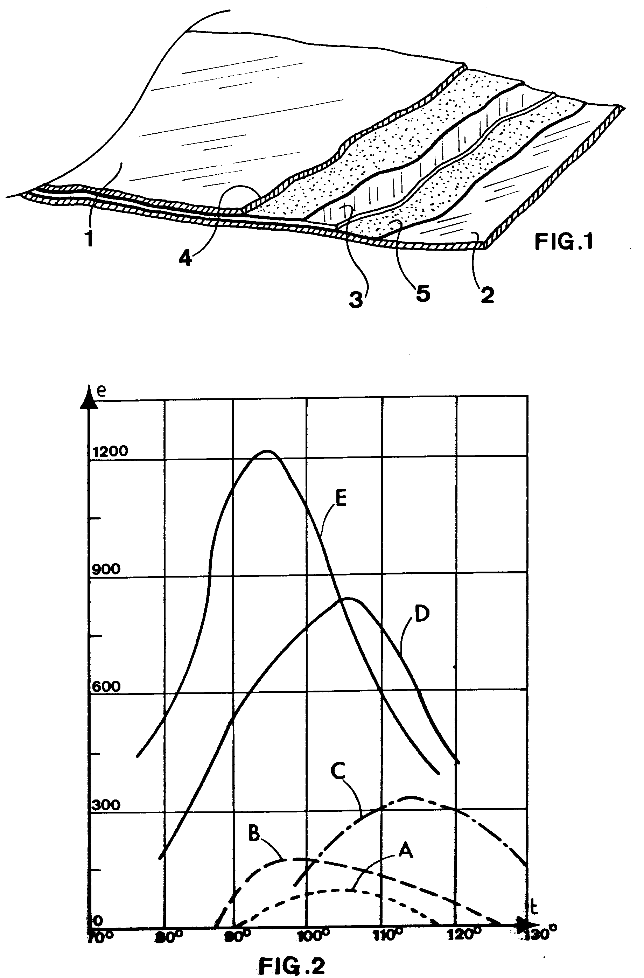

En se reportant à la figure 1, on voit un comment est constitué un complexe à cinq couches conforme à l'invention.

Un tel complexe polymère est plus particulièrement destiné à constituer une enveloppe thermorétractable et thermosoudable pour l'emballage de produits de toutes sortes (viandes, charcuterie, poissons, aliments pour animaux, légumes sec, légumes, chips, fruits, patisseries, biscuits, chocolat, produits en poudre, huile, beurre, margarine, produits laitiers, fromages, produits surgelés, confiseries, articles de décoration, produits de beauté, parfums, cosmétiques, médicaments, jeux, disques, livres, présentoirs, etc).

Il est formé de cinq couches qui sont :
- Une première couche externe 1 constituée par un polymère thermoplastique qui présente des liaisons chimiques covalentes et des liaisons ioniques.
- Une seconde couche externe 2 identique à la première, à savoir constituée par un polymère thermoplastique qui présente des liaisons chimiques covalentes et des liaisons ioniques.
- Une couche interne 3 située en sandwich entre les deux couches externes 1 et 2 et qui constitue une couche barrière destinée à assurer un haut degré d'imperméabilité vis-à-vis des liquides et des gaz, notamment de l'oxygène et de la vapeur d'eau.
- Deux couches d'un agent liant et adhésif 4 et 5, la couche 4 étant placée entre la couche extérieure 1 et la couche interne 3 et la couche 5 étant placée entre la couche interne 3 et la deuxième couche externe 2.

On constate que ce complexe est parfaitement symétrique et, donc réversible, de sorte qu'il peut être utilisé indifféremment en plaçant la couche externe 1 ou la couche externe 2 vers le substrat ou vers le produit emballé.

Pour simplifier la description, on suppose que la couche 1 est en contact avec le "substrat", c'est-à-dire avec l'atmosphère extérieure du lieu d'emballage, de conservation ou de présentation de l'article emballé, tandis que la couche 2 doit être en contact avec le produit à emballer.

Pour constituer les couches externes 1 et 2, on choisit une résine ionomère, c'est-à-dire une résine thermoplastique dont la réticulation se fait par liaison ionique, telle que celle vendue dans le commerce sous le nom déposé "SURLYN" par la société DU PONT DE NEMOURS, 9 rue de Vienne, F 75008 Paris (France).

De telles résines ionomères sont des copolymères d'éthylène et d'acide métacrylique qui comportent des cations métalliques tels que des cations sodium, des cations zinc ou des cations magnésium.

Les couches externes 1 et 2 en résine ionomère confèrent au complexe des propriétés supérieures à celle des films classiques d'emballage actuellement connus.

En effet, les films plastiques à base de résine ionomère présentent les caractéristiques suivantes :
- Résistance vis-à-vis des facteurs de dégradation physique et chimique et imperméabilité vis-à-vis des liquides; notamment les agents oxydants faibles chimiquement ne peuvent pas dégrader la structure chimique de la résine ionomère.
- Excellente tenue des soudures; en outre, le thermoscellage obtenu avec la résine ionomère donne déjà des fermetures solides et sûres, alors que la résine se trouve encore ramollie.

Cette propriété est avantageusement mise en oeuvre dans les dispositifs automatiques actuellement utilisés, en permettant une cadence de production relativement élevée et un rendement optimal. De plus, la résine ionomère présente une bonne tenue à chaud des soudures de sorte que les mauvaises soudures ou les défauts provenant du passage sur machine et des différentes contraintes dues à l'emballage des produits sont éliminés.

Pour illustrer cette faculté de résistance des soudures à chaud, on a représenté sur la figure 2 une série de courbes comparatives de l'étirement e d'un film en fonction de la température t. L'étirement est mesuré au moyen d'un ressort dont on mesure la tension. La température est donnée en degrés Celsius et est considérée à "l'interface" des soudures, à la jonction des deux épaisseurs soudées du film étudié.

La courbe A illustre les propriétés de tenue des soudures à chaud d'un film plastique de polymères de polyéthylène basse densité et montre que ce film ne supporte qu'un très faible étirement et, donc, ne donne aux soudures qu'une résistance très faible.

La courbe B illustre ces propriétés pour un film plastique à base de copolymères d'acétate de vinyle et d'éthylène et la courbe C illustre ces propriétés pour un film plastique à base de polymère de polyéthylène basse densité. Elles montrent toutes deux que ces films ne supportent qu'un très faible étirement et, donc, ne donnent aux soudures qu'une résistance peu importante.

On constate aussi que de tels films ont pour inconvénient de présenter des températures de fusion élevées (pratiquement toutes supérieures à 90° C) Ils sont donc plus longs à retrouver leur état solide. Or, c'est durant cette période de passage de l'état fondu à l'état solide que les soudures offrent la plus faible résistance et qu'elles ont tendance à s'ouvrir sous l'effet des contraintes mécaniques (poids, vibrations, chocs etc.).

Les courbes D et E illustrent ces propriétés pour deux films à base de résines ionomères de compositions voisines, les différences dites "de grade" tenant essentiellement à leur fluidité à l'état fondu. On remarque que ces résines présentent des températures de fusion plus faibles et une tenue des soudures à ces températures qui est d'environ dix fois plus importante que celle des films classiques.

On sait que cette tenue des soudures à chaud est importante dans de nombreuses applications et plus particulièrement :
- lorsqu'un poids important de produits est emballé en une seule opération, notamment par une machine automatique qui, en une seule séquence, confectionne un sac, le remplit et le ferme;
- lorsqu'on thermoscelle un emballage par serrage autour d'un produit qui a tendance à s'opposer à cette opération (poudre, produit pharmaceutique par exemple);
- lorsque l'on emballe des produits chauds;
- lorsque les emballages sont soumis à des vibrations mécaniques résultant soit du fonctionnement général des machines, soit de la coupe de l'emballage dès sa soudure.

Les bons résultats obtenus avec des résines ionomères s'accompagnent de températures de travail qui sont sont de l'ordre de 15 à 25° C inférieures à celles nécessaires pour le thermoscellage de films de polymères classiques (par exemple le polyéthylène). Il en résulte que si l'on chauffe les mâchoires de soudure à la température de thermoscellage du polyéthylène, le temps de soudure de la résine ionomère est réduit de plusieurs secondes, d'où un gain de productivité appréciable.

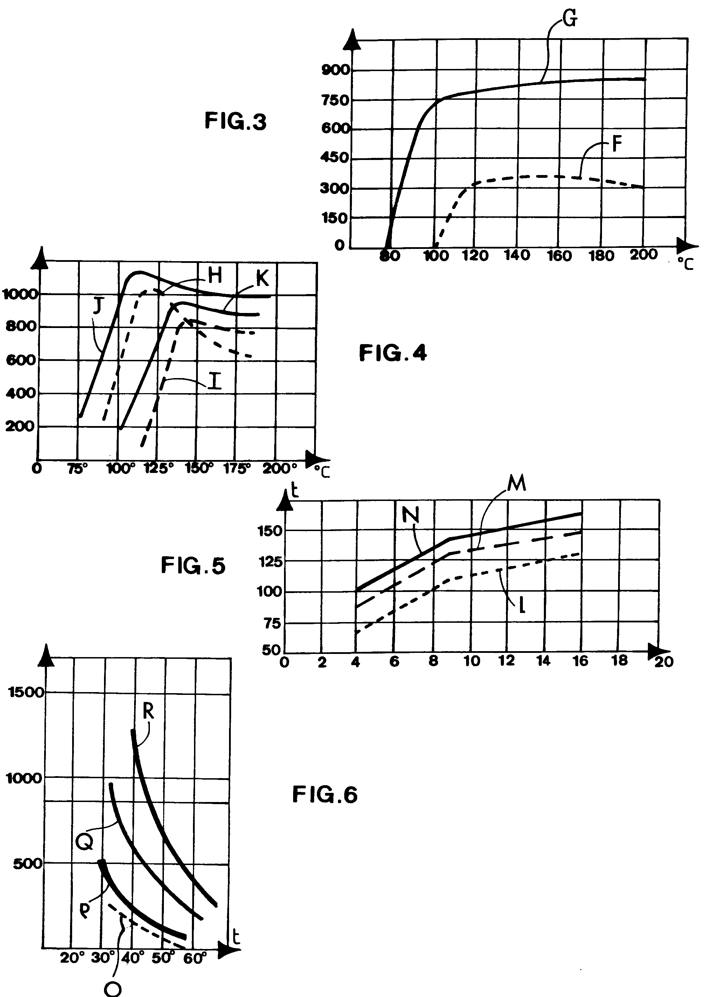

Pour illustrer la force de scellage, c'est-à-dire la tenue à froid des soudures en fonction de la température réelle de thermoscellage à l'interface, on a représenté les courbes de la figure 3. Les valeurs sont obtenues dans des conditions de thermoscellage sous une pression de 280 kilo Pascals (2,8 bar) pendant un temps d'application de 0,5 seconde pour deux films respectivement en polyéthylène basse densité (courbe F) et en résine ionomère (courbe G).

Dans le domaine des emballages plastiques, les problèmes de la tenue à chaud et à froid des soudures ainsi que celui de la température de thermoscellage sont primordiaux.

On constate que l'utilisation de résines ionomères permet de travailler à des températures plus basses: inférieures de l'ordre de 50° C à celles qui sont nécessaires pour une résine à base de polyéthylène basse densité. Il en résulte un avantage fonctionnel important car en effectuant l'opération de thermoscellage à température plus basse, on accroît la cadence de fonctionnement des machines et on réduit l'usure et la dégradation des résistances chauffantes ainsi que l'encrassage des dispositifs de soudure car on évite la dilution des vernis et/ou des encres appliquées sur le film.

De plus, on peut emballer des produits alors que cela était impossible du fait que la température de soudage est inférieure à un seuil critique qui les rend incompatibles avec des emballages dont la structure est sensible à la chaleur.

En outre, comme le montrent les courbes F et G, la différence de température de scellage entre un film à base de polyéthylène et un film à base d'ionomère confère à ce dernier une faculté de maintien et de tenue des soudures alors que la résine est encore dans un état fondu. Il en résulte une réduction des mauvaises soudures et des imperfections des soudures générées par une cadence de production rapide ou par des vibrations des machines.

Pour mieux montrer le large domaine de thermoscellage à basse température des résines ionomères (désignées ci-après par les dénominations commerciales utilisées par la société DU PONT DE NEMOURS selon leur grade), on reproduit le tableau comparatif ci-après :

| RESINES | POINT DE RAMOLLISSEMENT VICAT°C | INDICE DE FLUIDITE |
|---|---|---|
| SURLYN 1702 | 61 | 14.0 |
| SURLYN 1705 | 61 | 5.5 |
| SURLYN 1605 | 62 | 2.8 |
| SURLYN 1601 | 71 | 1.3 |
| SURLYN 1650 | 74 | 1.6 |
| SURLYN 1652 | 80 | 5.0 |
| Polyéthylène | 130 | 88 |

Le point de ramollissement VICAT et l'indice de fluidité sont deux critères déterminant de la température de thermoscellage.

On constate que le point de ramollissement VICAT et l'indice de fluidité des résine SURLYN leur confèrent d'excellentes facultés de thermoscellage à basse température et qu'elles présentent des température de thermoscellage inférieures d'au moins 10° C à ceux de résines à base de polymères de polyéthylène.

On vérifie sur ce tableau que l'une des propriétés de ces résines est qu'elles deviennent collantes lorsqu'elles se ramollissent sous l'effet de l'énergie calorifique, par modification de leur structure moléculaire interne. On note aussi qu'elles présentent une résistance à l'élongation relativement importante de sorte que les soudures obtenues sont plus résistantes et que l'emballage est mieux fermé.

Ces résines ionomères permettent d'obtenir des soudures résistantes et solides malgré la présence de souillures ou d'impuretés provenant de l'article à emballer.

Pour illustrer cette faculté, on a représenté sur la figure 4 les courbes obtenues dans les mêmes conditions d'essais que celle de la figure 3 et qui montrent la tenue des soudures en fonction de la température pour deux films différents, d'une part propres et d'autre part en présence d'impuretés (ici, des matières pulvérulentes présentes lors du conditionnement de pomme de terre).

La courbe H correspond au soudage d'un film en polyéthylène basse densité propre et la courbe I au soudage du même film, en présence d'impuretés.

La courbe J correspond au soudage d'un film en résine ionomère propre et la courbe K au soudage du même film en présence d'impuretés.

On voit que dans les deux cas le film en résine ionomère a des qualités nettement supérieures à celles d'un film de type habituellement utilisé.

La contamination de la surface de soudage résulte de la présence d'impuretés solides ou liquides.

Pour illustrer le thermoformage de film de résines ionomères dont la surface est souillée, on a établi le tableau comparatif ci-dessous :

| RESINES "SURLYN" N° | TYPE DE CATION | VISCOSITE DE LA MATIERE A 135°C ET A UNE VITESSE DE CISAILLEMENT DE 0.1s⁻¹ (kg.s/cm²) |
|---|---|---|
| 1702 | Zn | 0.35 |
| 1652 | Zn | 0.49 |
| 1605 | Na | 0.84 |
| 1705 | Zn | 1.05 |
| 1601 | Na | 1.26 |
| 1650 | Zn | 1.40 |

Dans le cas de substances solides (microparticules pulvérulentes), il est important que la résine mouille et entoure complètement lesdites particules en les intégrant dans la couche de scellage, sans diminution de la résistance de la soudure, ce qui est précisément une des facultés des résines ionomères.

Dans le cas de liquides ou de pâtes, le problème est différent car il est nécessaire, ici, que le liquide soit déplacé hors de la zone de thermoscellage. Cet effet dépend essentiellement de la rhéologie de la résine.

Le tableau ci-dessus montre, pour différents grades de résines ionomères "SURLYN", leur viscosité à 135° C et l'on voit que les résines qui ont des viscosités bien adaptées sont les trois premières et surtout la première.

En effet, plus la viscosité est faible, meilleure est la faculté de réalisation de thermoscellages en présence d'impuretés liquides.

Ces résultats sont très appréciables car la présence d'impuretés, notamment liquides, sont très fréquentes dans de nombreux domaines : emballage de produits alimentaires (viandes, poissons) ou de produits liquides.

Par ailleurs, ces résines ionomères présentent une bonne ténacité c'est-à-dire une bonne résistance mécanique à l'étirement, à l'abrasion, aux chocs et impacts, à la perforation aussi bien à haute qu'à basse température.

Pour fixer les idées, on peut rappeler que la résistance à l'impact "SPENCER" d'une feuille de résine ionomère associée à une feuille d'aluminium est de 25 à 40 % supérieure à celle d'une feuille de polymère du type polyéthylène de même épaisseur associée à une feuille d'aluminium identique à la précédente. Cette caractéristique confère aux emballages réalisés à partir de films en résine ionomère une grande faculté d'étirement et de moulage autour du produit à emballer, sans entraîner un amincissement trop important, notamment dans les angles, préjudiciable à la bonne tenue de l'emballage et une résistance à la microperforation qui est sensiblement trois fois supérieure à celle des films classiques à base de polymères tels que du polyéthylène.

Cette faculté de résistance à la microperforation se combine avantageusement avec les propriétés d'une couche barrière pour donner au produit emballé une meilleure protection contre l'humidité et les échanges gazeux non désirés, notamment de l'air.

Pour illustrer cette propriété, on a établi le tableau ci-après :

| | TRANSMISSION DE LA VAPEUR D'EAU g/24h/m^{2 A 38°C} ET 90% D'HUMIDITE RELATIVE | |
|---|---|---|
| STRUCTURES TESTEES | AVANT EPREUVE | APRES EPREUVE (20 CYCLES) |
| Papier40g/m2-polyéthylène,12g/m2- Feuille aluminium, 8µ-P.éthyl,25g/m₂ | 0.155 | 6.2 |
| Papier40g/m2-polyéthylène,12g/m2- Feuille aluminium, 8µ-ionomère,25g/m2 | 0.155 | 1.55 |
| Papier40g/m2-ionomère, 12g/m2- Feuille aluminium, 8µ-ionomère,25g/m2 | 0.155 | 0.62 |

Les résultats de ce tableau permettent de comparer la transmission de la vapeur d'eau par des structures comparables, qui se différencient les unes des autres uniquement par la couche de scellage qui est soit du polyéthylène, soit un ionomère. Cela met en évidence la supériorité de l'ionomère sur le polyéthylène pour ce qui est de sa résistance à la microperforation, laquelle survient par suite de flexions et/ou de torsions.

Les résines ionomères peuvent être imprimées et ont une excellente transparence. Leurs propriétés optiques sont surtout remarquables, pour la mise en oeuvre de l'invention, à l'égard de l'absorption des rayonnements infrarouges. En effet, grâce à leur composition chimique, les résines ionomères absorbent les rayonnements infrarouges deux fois mieux que les polymères du type polyéthylène.

Pour illustrer cette propriété, on a tracé trois courbes représentées sur la figure 5. Ces courbes représentent la température d'un film d'épaisseur de 100 microns de résine polyéthylène basse densité (courbe L), de résine à base de polymère de chlorure de polyvinylidène (courbe M) et de résine ionomère (courbe N), en fonction du temps de chauffe. La température t est exprimée en degrés C et le temps T en minutes.

On constate qu'un film en résine ionomère absorbe l'énergie rayonnée dans l'infrarouge deux fois mieux qu'une résine à base de polyéthylène. Cette propriété est avantageuse car elle permet d'accroître les cadences de production puisque les temps de refroidissement sont plus faibles.

Les qualités des résines ionomères s'ajoutent à celles qui sont propres à la couche barrière 3.

Une autre propriété des résines ionomères est de présenter une bonne résistance aux corps gras, qui sont fréquents : graisses alimentaires, gras des viandes et charcuteries, huiles, etc.

Pour illustrer cette propriété, on a représenté à la figure 6 des courbes qui montrent la résistance à la pénétration des huiles en fonction de la température pour des résines à base de polyéthylène basse densité (courbe O) et de résines ionomères de différents grades (courbes P, Q et R).

La couche barrière 3 est constituée par des copolymères statiques d'éthylène et d'alcool vinylique (EVOH) à faible teneur en éthylène (inférieur à 50%) tels que ceux vendus dans le commerce sous le nom déposé "CLARENE" par la société SOLVAY & Cie S.A., 12 Cours Albert Ier - F 75008 PARIS (France).

Ces polymères sont obtenus par hydrolyse de copolymères d'éthylène et d'acétate de vinyle. Il s'agit de thermoplastiques à structure semi-cristalline dont la représentation moléculaire est du type : 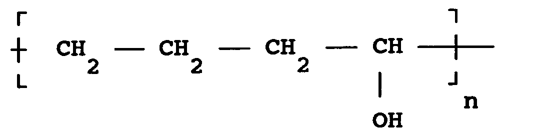
Ces polymères présentent les caractéristiques suivantes :
- excellente imperméabilité vis-à-vis des gaz, des arômes et des vapeurs organiques, ce qui évite oxydation, dénaturation, pertes de CO² etc.),
- bonne résistance aux agents chimiques, graisses et huiles,
- bonne transparence et brillance, ce qui permet de mettre en valeur l'aspect attractif de la présentation du produit,
- résistance élevée aux rayonnement électromagnétiques (rayonnements α, β, ultra-violet, etc.),
- bonne résistance mécanique et module de traction élevé,
- facilité de mise en oeuvre par des techniques classiques (extrusion, coextrusion, injection, association à l'intérieur de complexes),
- possibilité de recyclage des emballages après leur utilisation,
- conformité aux règlements et aux législations en vigueur sur la compatibilité vis-à-vis des produits alimentaires et notamment conformité à la directive 82/711 de la Communauté Economique Européenne et Subpart 21 CFR. 177.01360 (A) et (D) de la Food and Drug Administration (Etats Unis d'Amérique).

Par exemple, l'EVOH "CLARENE L6" présente les perméabilités suivantes vis-à-vis des produits indiqués :

| PRODUITS | PERMEABILITE (23°C, 0% HR) (en cm³.µm/m².d.bar) |
|---|---|
| Oxygène (O₂) | 4 |
| Azote (N₂) | 3,7 |
| Hélium (HE) | 2.520 |
| Argon (AR) | 1,1 |
| Hydrogène (H₂) | 450 |
| Monoxyde de carbone (CO) | 5,1 |
| Dioxyde de carbone (CO₂) | 12 |
| Butane (C₄h₁₀) | 2 |
| Méthane (CH₂) | 8 |
| Chlore (Cl₂) | 0,44 |
| Ethylène(C₂H₄) | 2 |
| Dioxyde de souffre (SO₂) | 6 |
| Fréon 12 | 2,8 |
| Ammoniac (NH₃) | 90 |
| (Mesures réalisées selon norme ASTM D 1434 T) | |

Cette couche barrière 3, on le voit, présente des avantages marqués mais, en revanche, elle est très sensible à l'humidité et elle n'est utilisable en film multicouches ni "à l'extérieur" du film, côté substrat, ni "à l'intérieur" du film, côté produit", puisque dans un cas comme dans l'autre l'ambiance est au mieux humide et au pire liquide.

Ici, la couche barrière 3 est prise en sandwich entre deux couches de protection à la fois robustes d'un point de vue mécanique et efficacement étanche. En outre, les couches extérieures 1 et 2 en résine ionomère, comme on l'a précisé plus haut, participent à l'effet barrière puis qu'elles reforcent la protection contre les microperforations accidentelles.

De plus, le confinement de la couche barrière 3 entre deux couches d'ionomère permet d'obtenir une soudure résistante, alors que la soudure de la couche barrière bien que techniquement possible ne permet pas d'obtenir des soudures solides.

C'est pourquoi une film conforme à l'invention permet d'utiliser pour des emballages lourds des matériaux qui étaient jusqu'à maintenant cantonnés à la réalisation de petits contenants pour quelques dizaines de grammes de produits : biscuits, moutarde, cosmétiques etc. ou à la finition de contenants plus robustes : couvercles et opercules de barquettes et de boîtes en carton par exemple.

De même, selon l'invention les couches 1 et 2 protègent la couche barrière 3 contre la vapeur d'eau résultant de l'hygrométrie du milieu ambiant.

Selon une variante de réalisation, la couche barrière 3 est constituée par une résine à base de copolymère de chlorure de vinylidène telle que celle vendue dans le commerce sous le nom déposé "IXAN" par la société SOLVAY & Cie S.A. déjà citée, résine à laquelle on ajoute des plastifiants (à raison d'environ 2 %) et des stabilisants (à raison d'environ 4 %).

La résine utilisée de préférence est celle que la société SOLVAY & Cie S.A. désigne par la référence "IXAN WV PV" dont les caractéristiques figurent dans le tableau suivant :

| | UNITES | VALEURS |
|---|---|---|
| Aspect | Blanc avec reflets | |
| | Blanc avec reflets | |
| Densité volumique | kg/dm₃ | 0.6 - 0.8 (2) |
| Densité | kg/dm₃ | approx. 1.7 |
| Viscosité relative | | 1.3 - 1.75 (2) |
| Matière volatiles | g/kg | < 5 |
| Dimensions des particules | mm | 0.1 - 03 (2) |
| Température d'extrusion | °C | 140 - 180 (3) |

Il faut noter ici que les produits polyvinyliques, dont font partie les copolymères de chlorure de vinylidène, sont contestés quant à leur adéquation à envelopper des produits alimentaires. Or, le confinement de cette couche barrière 3 entre deux couches d'ionomère permet, précisément, de garantir le contact des produits emballés avec le seul matériau parfaitement "alimentaire" du complexe.

Cela permet de concilier les avantages techniques et économiques des copolymères de chlorure de vinylidène avec les impératifs extérieurs : considérations commerciales, psychologiques ou réglementaires.

Les couches de liaison 4 et 5 sont constituées par une résine adhésive extrudable à base de copolymères d'éthylène et d'acétate de vinyle, ou d'éthylène et d'acrylate de méthyle ou bien encore de polymères à base de polyéthylène haute ou basse densité, ou de polymères de polypropylène et d'éthylène.

Ces résines sont vendues dans le commerce sous le nom déposé "BYNEL" par la société DU PONT DE NEMOURS déjà citée plus haut.

Ces couches 4 et 5 assurent d'une part la cohésion, c'est-à-dire la liaison mécanique entre les couches 1 et 3 d'une part, 2 et 3 d'autre part. Elles assurent, en outre, la liaison chimique par pontage entre ces couches 1, 2 et 3.

Les couches 4 et 5 sont nécessaires pour éviter tout décollement ou désolidarisation des couches 1, 2 et 3 susceptibles, par vieillissement du complexe ou par suite de manipulations répétées, d'entraîner une pénétration d'air ou de vapeur d'eau jusqu'à l'intérieur de l'emballage, au contact du produit emballé qui pourrait en être altéré.

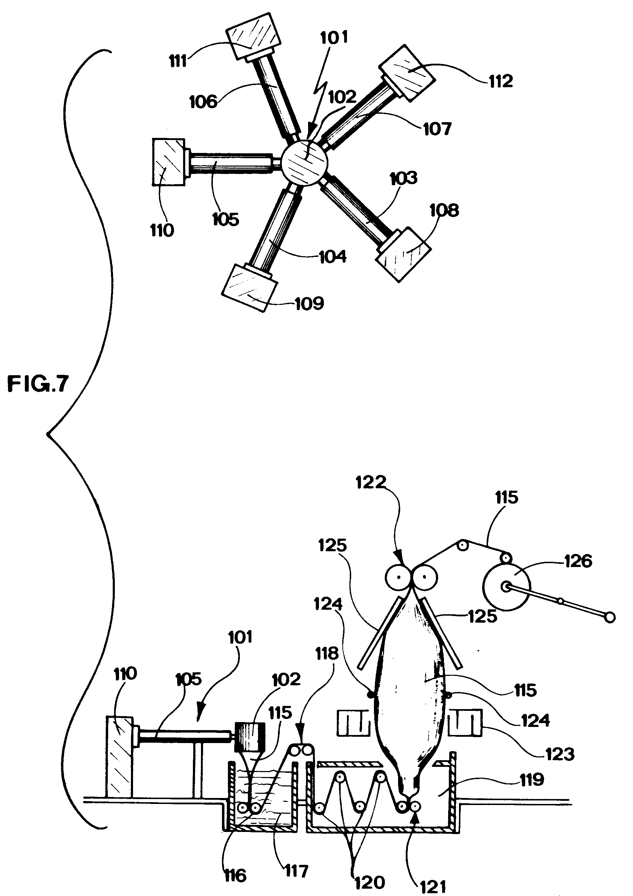

En se référant à la figure 7, on voit qu'un procédé de réalisation d'un complexe conforme à l'invention comprend plusieurs étapes qui se déroulent en se succédant de façon continue.

La première étape consiste à extruder les matières premières, généralement en granulés, qui sont amenées par tous moyens connus à un ensemble d'extrusion 101 d'un type connu équipé d'une tête filière tubulaire de coextrusion 102 à cinq voies 103 à 107 et cinq extrudeuses 108 à 112 alimentées chacune par la matière première appropriée.

Ces matières premières sont constituées par les résines thermoplastiques de composition voulue et constituant chacune un extrudat amorphe et homogène qui présente des propriétés mécaniques satisfaisantes pour donner naissance, par co-extrusion, à une gaine 115 pouvant être étirée et pincée par des rouleaux 116 dans un bain de refroidissement 117, afin pour donner une orientation longitudinale à la gaine 115.

Le bain 117 est un bain d'eau adoucie portée à la température de 6° C. Pour éviter le collage de la gaine 115 sur les rouleaux 116, on utilise des techniques qui sont bien connues de l'homme de métier et que l'on ne décrira donc pas.

L'opération de trempage a pour objectif de figer l'orientation longitudinale de la gaine 115 résultant de son passage dans les rouleaux 116 et de déterminer ainsi la largeur du ruban aplati et donc le diamètre de la gaine. Par simple modification du niveau d'eau dans le bain 117, on obtient une variation de la largeur du ruban, dans un rapport de 1 à 1,15.

La gaine aplatie 115 qui sort du bain 117 est conduite, sous forme d'un ruban aplati, par des rouleaux 118 à l'intérieur d'un tunnel à air chaud 119 en circulation permanente. Le tunnel 119 contient des rouleaux 120 qui conduisent le ruban aplati jusqu'à des rouleaux de renvoi 121 qui pincent le ruban aplati et qui sont situés à l'aplomb de rouleaux pinceurs 122 disposés à une certaine hauteur réglable en fonction de la largeur de la gaine 115.

Il en résulte que le ruban aplati qui est engagé entre les rouleaux pinceurs 121 et 122 détermine une capacité étanche à l'intérieure de laquelle on introduit de l'air comprimé qui reste emprisonné et assure ainsi le gonflement en continu de la gaine 115 afin de transmettre à toutes les couches co-extrudées qui la composent un étirage aussi bien transversal que longitudinal, appelé étirage biaxial.

Sous l'effet de la chaleur du tunnel 119, les différentes couches 1, 2, 3, 4 et 5 qui constituent la gaine 115 se ramollissent. Notamment, cette chaleur a pour effet, d'une part de diminuer la cohésion des liaisons physico-chimiques de la couche 1 ou 2 située à l'extérieur du ruban aplati, de sorte qu'elle présente une meilleure aptitude à l'étirement biaxial et, d'autre part de ramollir les autres couches 2, 3, 4 et 5 de telle manière qu'elles suivent sans adhérence l'étirage biaxial imposé à la couche 1.

De l'air froid est insufflé au moyen d'un dispositif annulaire 123 disposé au-dessus de la sortie du tunnel 119 et au-dessous de rouleaux de centrage 124, eux-mêmes situés au-dessous de guides convergents 125 qui favorisent l'applatissement de la gaine 115 vers les rouleaux 122.

Le taux d'étirage transversal est défini comme étant le rapport entre la largeur du ruban multicouches aplati avant gonflage et la largeur de la gaine étirée biaxialement aplatie. Ce taux peut être, pour une capacité d'air captif identique, ajusté en faisant varier la hauteur entre les rouleaux pinceurs 121 et 122.

Le taux d'étirage longitudinal est défini comme étant le rapport entre la vitesse périphérique des rouleaux 121 et celle des rouleaux 122. Il peut être réglé par une simple modification de la vitesse relative de ces rouleaux 121 et 122.

A la sortie des rouleaux 122, la gaine 115 étirée biaxialement est enroulée en bobine 126 constituant ainsi un produit semi-fini pouvant être stocké en vue d'un usage ultérieur.

Un effet particulièrement intéressant de l'invention réside dans le fait que la couche extérieure 1 est constituée par une résine ionomère dont la rétraction est obtenue pour des températures moins élevées que celles nécessaires à la rétraction des résines thermoplastiques de polymères réticulés.

Pour provoquer la rétraction de la gaine après mise en place d'un produit à conditionner, on peut alors utiliser un dispositif qui consomme moins d'énergie et qui ne dégage pas de vapeur d'eau. Notamment, un dispositif simple tel qu'un tunnel à air chaud se prête particulièrement bien à cette rétraction biaxiale du film.

Deux variantes sont possibles suivant l'utilisation ultérieure que l'on envisage pour la gaine 115 stockée en bobine 126.

Une première variante consiste à fendre la gaine selon deux génératrices opposées, notamment le long des plis formés pour sa mise en place sur une bobine, puis mise en place sur des bobine après découpe en au moins deux lés de chacune de ces deux nappes simples.

La seconde de ces variantes consiste à transformer la gaine thermorétractable multicouches semi-finie en sacs de dimensions diverses par des procédés et des techniques classiques à la portée de l'homme de métier et qui ne seront pas décrits.

Notamment, pour la fabrication de sacs on procède par des techniques courantes de l'industrie des matières plastiques à un refroidissement du film à plat après une opération d'extrusion séquentielle pour réaliser la structure complexe formant le film, puis à un réchauffement du film en vue de réaliser une mono-orientation de celui-ci par son étirement dans une direction correspondant à l'axe d'extrusion.

Comme le complexe utilisé présente les propriétés décrites, on peut ainsi obtenir une rétraction optimum des sacs dans une direction sensiblement identique à celle de la largeur des produits emballés et donc une bonne présentation de ceux-ci. Ces sacs mono-orientés présentent alors des propriétés de souplesse dimentionnelle qui permettent de les utiliser pour emballer des produits alimentaires fragiles et délicats tels que de la viande fraîche, de la charcuterie, du poisson, etc.

On voit que grâce à l'invention, il est possible de réaliser des emballages destinés à contenir des produits notamment alimentaires au moyen d'une enveloppe constituée par une structure polymère multicouches dont le substrat est situé à l'extérieur et dont le produit est situé à l'intérieur, une couche barrière étant située entre les deux couches extérieures 1 et 2.

De la sorte, cette enveloppe présente toutes les caractéristiques d'alimentarité et elle est notamment conforme à la réglementation française (article 2 du décret 70.392 du 8 mai 1970).

Une telle enveloppe présente une épaisseur totale de plusieurs dizaine de microns et présente les caractéristiques ci-après :
- module d'élasticité à 23° C, longitudinal et transversal,
- résistance longitudinale à la rupture transversale,
- allongement longitudinal à la rupture,
- allongement transversal à la rupture,
- résistance à la désadhérence entre deux couches, couche extérieure/couche barrière,
- rétrécissement libre longitudinal,
- rétrécissement libre tranversal,
- tension longitudinal de rétrécissement,
- tension transversale de rétrécissement,
- transparence,
- brillance sous 45°,
- brillance sous 75°,
- perméabilité à l'oxygène (grammes/24 heures/mètre carré par atmosphère),
- résistance longitudinale à la propagation de la déchirure,
- résistance transversale à la propagation de la déchirure,

Il est important de noter que, selon l'invention, le choix des matériaux constitutifs des différentes couches du complexe confère à celui-ci des caractéristiques supérieures à celles des pellicules actuellement connues.

## Revendications

**1-** Complexe polymère multicouches caractérisé en ce qu'il comprend :
- deux couches extérieures (1 et 2), l'une destinée à être en contact avec le substrat et l'autre destinée à être en contact avec le produit emballé, couches (1 et 2) qui sont constituées par au moins un polymère thermoplastique contenant des liaisons ioniques et covalentes, à savoir une résine ionomère
- au moins une couche intérieure "barrière" (3) constituée par au moins un polymère thermoplastique à structure semi-cristalline, à savoir une résine comprenant des copolymères d'alcool vinylique et d'éthylène,
- et de préférence une couche intermédiaire adhésive (4-5) intercalée entre la couche barrière (3) et chaque couche extérieure (1-2).

**2-** Complexe selon la revendication 1, caractérisé en ce que la résine ionomère est une résine qui comprend des coplolyméres d'éthylène et d'acide métacrylique.

**3-** Complexe selon la revendication 1, caractérisé en ce que la résine ionomère contient des ions métalliques tels que ceux du zinc ou du sodium.

**4-** Complexe selon la revendication 1, caractérisé en ce que les couches intermédiaires adhésives (4 et 5) sont constituées par une résine de copolymères d'acétate de vinyle et d'éthylène.

**5-** Procédé pour l'obtention d'un complexe selon la revendication 1, caractérisé en ce que l'on extrude le film sous la forme d'une gaine tubulaire (115) en matériau à faible point de fusion, que l'on fait passer cette gaine à l'intérieur d'un bain aqueux réfrigérant (117) tout en l'aplatissant et en l'étirant, que l'on chauffe cette gaine aplatie (115), que l'on ouvre et gonfle la gaine (115) par introduction d'air comprimé jusqu'à créer une bulle dilatée provoquant l'étirement biaxial de la gaine (115), qu'on limite cette bulle en refermant ladite gaine (115) par pincement transversal, qu'on enroule la gaine (115) aplatie et refroidie en vue de son utilisation soit immédiate soit après stockage en bobines (126).

**6-** Procédé pour l'obtension d'un complexe selon la revendication 5, caractérisé en ce que l'on fait passer la gaine (115) aplatie entre des cylindres aplatisseurs (120) et entre des cylindres pinceurs (121) placés à l'intérieur d'une enceinte chauffée (119).
